# FASCICULE DE BREVET EUROPEEN

(11) **EP 1 861 297 B1**
(45) Date de publication et mention de la délivrance du brevet: **02.12.2009**
(21) Numéro de dépôt: 05739423.1
(22) Date de dépôt: 17.03.2005
(51) Int. Cl.: B60T 8/00, B60T 13/66

(54) **Dispositif de freinage**
Bremsvorrichtung
Braking device

(43) Date de publication de la demande: 05.12.2007
(73) Titulaire: RENAULT TRUCKS, 69800 St Priest (FR)
(72) Inventeur: ROLLIN, Christian, F-38460 Saint Romain de Jalionas (FR)
(74) Mandataire: Putet, Gilles
(86) Numéro de dépôt international: PCT/FR2005/000653
(87) Numéro de publication internationale: WO 2006/097583

(56) Documents cités:
- EP-A- 0 995 657
- EP-A- 0 995 659
- EP-A- 0 995 922

## Description

### Domaine de l'invention

La présente invention concerne un dispositif de freinage notamment, pour un véhicule industriel.

### Arrière plan technologique

De manière générale, un véhicule motorisé comprend un ou plusieurs circuits de freinage qui, lorsque le véhicule est en condition de roulage, permettent de ralentir la marche du véhicule, puis éventuellement d'arrêter celui-ci. Indépendamment de ce ou de ces derniers, un système de frein de stationnement permet de maintenir le véhicule immobile lorsque celui-ci est en condition de stationnement. Le système de frein de stationnement agit généralement sur le ou les trains roulants arrières du véhicule.

Un dispositif de commande du circuit de freinage permet à un conducteur d'actionner le ou les circuits de freinage et un dispositif de commande du système de frein de stationnement permet à un conducteur d'actionner le système de freinage de stationnement.

Dans certaines conditions d'évolution, un véhicule peut être amené à être immobilisé sur un sol en pente qui, de plus, peut être de faible adhérence par exemple, boue, neige, verglas, etc...

Un exemple typique d'un véhicule confronté à ce type de conditions de stationnement peut être un véhicule d'intervention de la sécurité civile, par exemple de lutte contre l'incendie. Ce type de véhicules peut être à transmission intégrale, c'est-à-dire chacun de ses trains roulants est moteur et peut présenter une garde au sol élevée et, donc, un centre de gravité également élevé.

L'architecture d'un tel véhicule peut faire que, lorsqu'il doit être immobilisé sur un sol en pente, qui de plus présente une faible adhérence, le frein de stationnement agissant uniquement sur le ou les trains roulants arrières peut s'avérer insuffisant pour immobiliser le véhicule.

Il peut, notamment, se produire un délestage du train arrière qui doit assurer normalement l'immobilisation du véhicule ; ceci peut avoir comme conséquence un glissement du véhicule.

Il apparaît donc souhaitable d'améliorer de façon générale l'immobilisation d'un véhicule en conditions de stationnement.

Le document EP-A-995 657 décrit un dispositif de freinage dans lequel le frein de stationnement consiste en un blocage mécanique des actionneurs de frein dans une position de serrage. Le frein de stationnement agit sur toutes les roues du véhicule. Le module EBS est piloté électriquement, de même que le dispositif de blocage mécanique des actionneurs.

### Description de l'invention

Un but de l'invention est d'améliorer la capacité d'immobilisation d'un véhicule lorsqu'il est stationné.

Un autre but de l'invention est d'améliorer la capacité d'immobilisation d'un véhicule lorsque celui-ci est stationné dans une condition de stationnement exceptionnelle.

L'invention a essentiellement pour objet un dispositif de freinage pour une véhicule présentant au moins deux trains roulants.

Cet objet est resolu par un dispositif selon la revendication 1.

Dans l'utilisation d'un véhicule, on peut distinguer une condition normale de stationnement dans laquelle il n'y a pas de risque de glissement du véhicule et une condition exceptionnelle de stationnement dans laquelle il y a un risque de glissement du véhicule malgré l'action du système de frein de stationnement. Une condition exceptionnelle de stationnement peut être un stationnement sur une pente qui peut par ailleurs présenter une faible adhérence. En condition normale de stationnement, le système de frein de stationnement peut s'avérer suffisant pour assurer l'immobilisation du véhicule. C'est pour cela que le dispositif selon l'invention prévoit des moyens assurant une activation sélective du freinage sur le train roulant qui n'est pas activé par le système de frein de stationnement.

Selon une forme de réalisation du dispositif selon l'invention, les moyens de pilotage fluidique du module électronique de freinage EBS du deuxième circuit de freinage sont connectés, d'une part, à un circuit de commande du deuxième circuit fluidique de freinage pour agir sur le deuxième circuit de freinage, en condition de roulage du véhicule, et d'autre part à un circuit de commande du système de stationnement pour agir sur au moins un deuxième train roulant, en condition de stationnement du véhicule. Les moyens de pilotage fluidique du module électronique de freinage EBS du deuxième circuit de freinage permettent une inter opération entre deux circuit de commande qui, dans l'art antérieur, sont indépendants à savoir le circuit de commande du deuxième circuit fluidique de freinage pour agir sur le deuxième circuit de freinage et le circuit de commande du système de stationnement pour agir sur au moins un deuxième train roulant, en condition de stationnement du véhicule.

Selon une possibilité de réalisation, les moyens de pilotage fluidique du module électronique de freinage EBS du deuxième circuit de freinage comprennent une double valve d'arrêt permettant de piloter le module électronique de freinage EBS. La double valve d'arrêt présente une entrée reliée au circuit de commande du deuxième circuit de freinage en condition de roulage du véhicule, et une entrée reliée au circuit de commande du système fluidique de frein de stationnement. La mise en oeuvre d'une double valve permet par un équipement simple et fiable de réaliser l'interopérabilité entre le circuit de commande du deuxième circuit fluidique de freinage pour agir sur le deuxième circuit de freinage et le circuit de commande du système de stationnement pour agir sur au moins un deuxième train roulant, en condition de stationnement du véhicule.

Dans une possibilité de réalisation des moyens d'activation sélective des moyens de pilotage fluidique du module électronique de freinage EBS du deuxième circuit de freinage, il peut être envisagé que les moyens d'activation sélective comprennent un distributeur piloté par le système de stationnement interdisant un écoulement fluidique vers la double valve d'arrêt en condition de stationnement normal et autorisant un écoulement fluidique vers la double valve d'arrêt en condition exceptionnelle de stationnement. Le distributeur est donc piloté par le système de frein de stationnement, en d'autres termes le fait que le distributeur permette un écoulement de fluide ou bien empêche un écoulement de fluide dépend d'une commande venant du système de stationnement.

Dans une forme de réalisation, une électrovanne d'un circuit fluidique de commande d'un organe du véhicule contrôle l'écoulement fluidique vers le distributeur. L'effet de cette disposition est que le distributeur n'est alimenté en fluide que lorsque l'organe en question du véhicule est activé, cette activation étant obtenue par le fait que l'électrovanne est passante. Ainsi, l'alimentation fluidique du distributeur est alors conditionnée à l'activation de l'organe en question. Ceci signifie que si l'organe en question n'est pas activé, le distributeur n'est pas alimenté et, donc, il ne peut y avoir d'action sur la double valve d'arrêt.

En revanche, si l'organe en question est activé et, si le pilotage du distributeur place ce dernier dans une configuration passante, le module électronique de freinage EBS du deuxième circuit de freinage sera activé puisque la double valve d'arrêt pourra recevoir un signal fluidique en provenance du distributeur.

Selon plusieurs possibilités, l'électrovanne peut être une électrovanne de commande de différents organes du véhicule, à savoir :
- l'électrovanne est l'électrovanne de commande d'un blocage de différentiel du premier train roulant.
- l'électrovanne est l'électrovanne de commande de transmission du couple moteur au deuxième train roulant.
- l'électrovanne est l'électrovanne d'enclenchement d'une gamme de vitesse lente d'une boîte de vitesse de transfert.
- l'électrovanne est l'électrovanne de commande du blocage du différentiel du deuxième train roulant.

Ce qu'il est important de noter est que la mise en action de chacun de ces organes du véhicule traduit une évolution du véhicule sur un terrain difficile présentant potentiellement de fortes pentes et/ou des conditions d'adhérence dégradées de telle sorte que si le véhicule devait être immobilisé, il serait typiquement dans une condition de stationnement exceptionnelle. Dans cette forme de réalisation du dispositif, le freinage sur le premier train roulant par le circuit de frein de stationnement et sur le deuxième train roulant par la double valve d'arrêt est conditionné par l'activation d'un organe du véhicule traduisant une condition de freinage de stationnement exceptionnelle.

Selon une disposition du dispositif, le système fluidique de frein de stationnement comprend un organe de commande qui pilote une valve de commande des actionneurs de stationnement et le distributeur.

De façon usuelle, le premier train roulant est le train roulant arrière et le deuxième train roulant est le train roulant avant, car le système fluidique de frein de stationnement agit généralement sur le train roulant arrière.

### Brève description des figures

Pour sa bonne compréhension, l'invention est décrite en référence au dessin ci-annexé représentant à titre d'exemple non limitatif une forme de réalisation d'un dispositif de freinage selon celle-ci.
Figure 1 est un.schéma représentant un dispositif de freinage selon l'art antérieur,
Figure 2 est un schéma représentant un dispositif de freinage selon l'invention dans une configuration dans laquelle un freinage en condition de roulage est appliqué au dispositif,
Figure 3 est un schéma représentant le dispositif de freinage selon l'invention dans une configuration dans laquelle un freinage de stationnement en condition de stationnement normal est appliqué au dispositif,
Figure 4 est un schéma le dispositif de freinage selon l'invention dans une configuration dans laquelle un freinage de stationnement en condition de stationnement exceptionnel est appliqué au dispositif.

### Description détaillée de l'invention

Par convention, sur les figures, les circuits ou systèmes de puissance sont représentés par des lignes continues tandis que les circuits ou systèmes de commande sont représentés en lignes discontinues. On précise également que lorsqu'un circuit ou système de commande est activé, il est alors représenté par deux lignes discontinues parallèles.

De façon générale, un véhicule présente un ou plusieurs circuits de freinage qui permettent de ralentir la marche d'un véhicule et un système de frein de stationnement qui permet de maintenir le véhicule immobilisé.

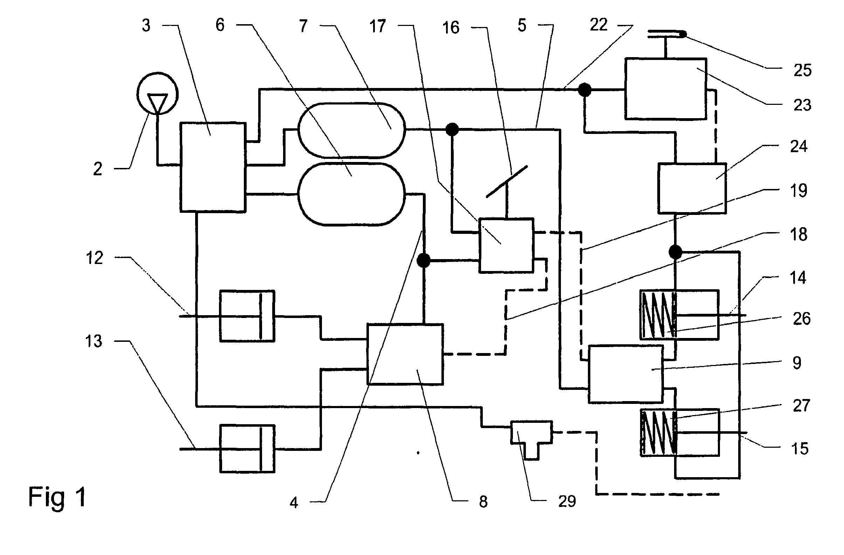

L'exemple représenté à la figure 1 montre un dispositif de freinage pneumatique destiné plus particulièrement à un véhicule industriel.

Il est notamment prévu un compresseur d'air 2 qui alimente un distributeur d'air 3. Le distributeur d'air 3 a comme fonction de filtrer et réguler la pression d'air provenant du compresseur d'air.

Pour un véhicule industriel, il est prévu deux circuits de freinage 4, 5 qui agissent respectivement sur le ou les trains roulants avant et sur le ou les trains roulants arrière.

Comme on peut le voir sur la figure 1, on trouve deux réservoirs pneumatiques 6 et 7 en aval du distributeur 3 qui alimentent respectivement le circuit de freinage avant 4 et le circuit de freinage arrière 5.

Le circuit de freinage avant 4 comprend un module électronique de freinage EBS avant 8 qui est piloté, à la fois, de manière électronique et de manière fluidique. Le pilotage électronique n'est pas représenté sur les figures.

Le circuit de freinage arrière 5 comprend également un module électronique de freinage EBS arrière 9 qui est également piloté, à la fois, de manière électronique et de manière fluidique. Le pilotage électronique toutefois n'est pas représenté sur les figures.

Chaque module électronique de freinage EBS distribue la pression pneumatique à appliquer à des actionneurs 12 et 13 pour le train roulant avant et des actionneurs 14 et 15 pour le train roulant arrière. Les actionneurs convertissent l'énergie pneumatique en une action mécanique sur un moyen de freinage d'une roue, c'est-à-dire une plaquette agissant sur un disque ou une garniture agissant sur un tambour.

Le déclenchement de freinage est généralement à l'initiative d'un conducteur qui appuie le plus souvent avec son pied sur une pédale 16 d'un organe de commande 17.

En fonction de la course appliquée sur la pédale 16, un signal pneumatique proportionnel à cette course est envoyé au travers d'un circuit de commande pneumatique avant 18 vers le module électronique de commande EBS avant 8, et symétriquement un signal pneumatique est envoyé au travers d'un circuit de commande pneumatique arrière 19 vers le module électronique de commande arrière 9.

Pour ce qui est du système de frein de stationnement 22, il peut être prévu un organe de commande 23. Généralement, l'organe de commande 22 est activé manuellement par un levier 25, ce qui fait que le système de frein de stationnement peut être appelé « frein à main ».

Dans l'exemple représenté, l'organe de commande 23 pilote pneumatiquement une valve 24. Dans la forme d'exécution représentée, lorsque le système de frein de stationnement n'est pas activé, la valve 24 est passante et autorise un passage d'air qui comprime des ressorts 26 et 27.

En revanche, lorsque le conducteur souhaite placer son véhicule en condition de stationnement, il agit sur l'organe de commande 23 qui ordonne la fermeture de la valve 24. Les ressorts 26 et 27 se détendent et viennent pousser les actionneurs 14 et 15.

On voit ainsi que le système de stationnement qui n'agit que sur un train roulant, en l'occurrence le train roulant arrière, peut ne pas être en mesure d'assurer l'immobilisation du véhicule notamment en cas de délestage du train roulant arrière.

Un point à préciser est que, dans l'exemple représenté, le véhicule est un véhicule à transmission intégrale, c'est-à-dire dont chaque train roulant transmet le couple moteur. Ce type de véhicule, généralement destiné à circuler sur des terrains accidentés, présente une boîte de transfert qui présente une gamme de vitesses lentes. L'activation de la gamme de vitesses lentes de la boîte de transfert se fait par une électrovanne 29. La boîte de transfert n'est pas représentée sur les figures.

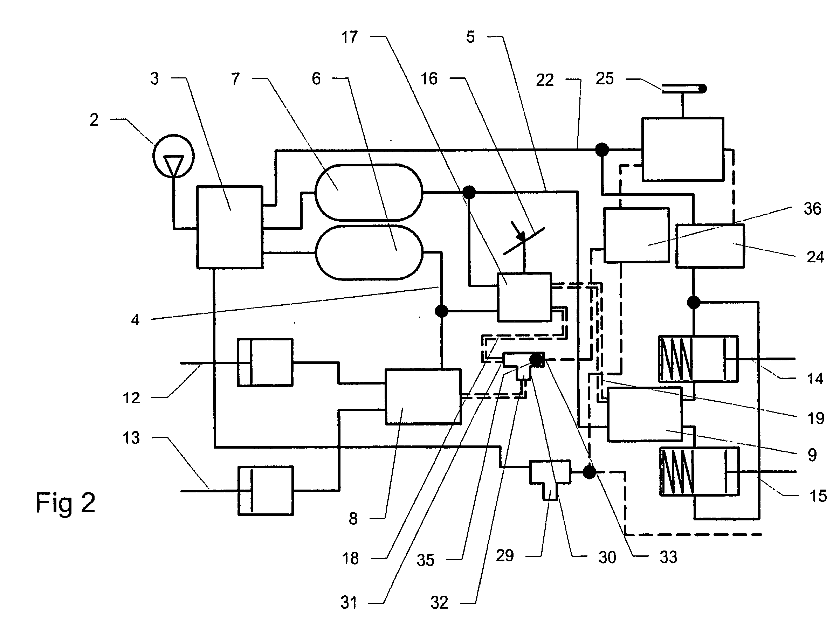

La figure 2 et les figures suivantes représentent une forme de réalisation du dispositif de freinage selon l'invention, dans plusieurs états de fonctionnement.

On peut voir sur ces figures que le système de frein de stationnement peut interagir avec le circuit de freinage avant 4 sous certaines conditions.

Il est notamment prévu d'insérer une double valve d'arrêt 30 dans le circuit de commande du circuit de freinage avant 4. La double valve d'arrêt 30 présente une entrée 31 reliée à l'organe de commande 17 et une sortie 32 reliée à l'orifice de pilotage pneumatique du module électronique de freinage EBS avant 8 du circuit de freinage avant 4. La seconde entrée 33 de la double valve d'arrêt 30 est reliée à un distributeur 36. La double valve d'arrêt 30 présente un clapet 35 qui obture l'entrée 31 ou 33 qui est à la pression la plus basse.

Le distributeur 36 présente une entrée 37, une sortie 38 et un orifice de pilotage qui est relié à l'organe de commande du circuit de frein de stationnement.

Le pilotage du distributeur 36 se fait de la manière suivante :
- dans le cas où l'organe de commande 23 du frein de stationnement est en position de désactivation - en d'autres termes le frein de stationnement n'est pas sollicité - une pression d'air s'applique sur l'orifice de pilotage 39 du distributeur 36 et celui-ci n'est pas passant,
- dans le cas où l'organe de commande 23 du frein de stationnement est en position d'activation - en d'autres termes le frein de stationnement est sollicité - aucune pression d'air ne s'applique sur l'orifice de pilotage 39 du distributeur 36 et celui est alors passant.

Comme on l'a vu, l'orifice de sortie 38 du distributeur 36 est relié à l'orifice d'entré 33 de la double valve d'arrêt 30. Par conséquent, lorsque le distributeur 36 est passant, la double valve d'arrêt peut recevoir de l'air sous pression par son entré 33.

Dans l'exemple décrit, le circuit pneumatique de commande de la gamme de vitesses lentes de la boîte de transfert présente un piquage et est relié à l'entrée 37 du distributeur 36.

On voit donc que, lorsque le distributeur 36 est passant, la double valve d'arrêt 30 peut être alimentée en air comprimé par le circuit de commande de la gamme de vitesses lentes de la boite de transfert.

Le fonctionnement et les avantages du dispositif selon l'invention apparaîtront plus clairement grâce aux différents exemples de mise oeuvre de dispositif.

Figure 2 montre le dispositif de freinage lorsque le véhicule est en condition de roulage et que le conducteur souhaite ralentir la marche de son véhicule.

Il appuie donc sur la pédale 16, ce qui est symbolisé par une flèche sur celle-ci. L'organe de commande 17 agit alors sur les modules électroniques de freinage EBS avant 8 et arrière 9 pour déplacer les actionneurs avant 12, 13 et arrière 14, 15.

La double valve d'arrêt 30 a alors une action transparente puisque le système de frein de stationnement n'est pas sollicité et, par conséquent, le distributeur 36 n'est pas passant. L'entrée 33 de la double valve d'arrêt 30 est à pression nulle et le clapet 35 obture l'entrée 33.

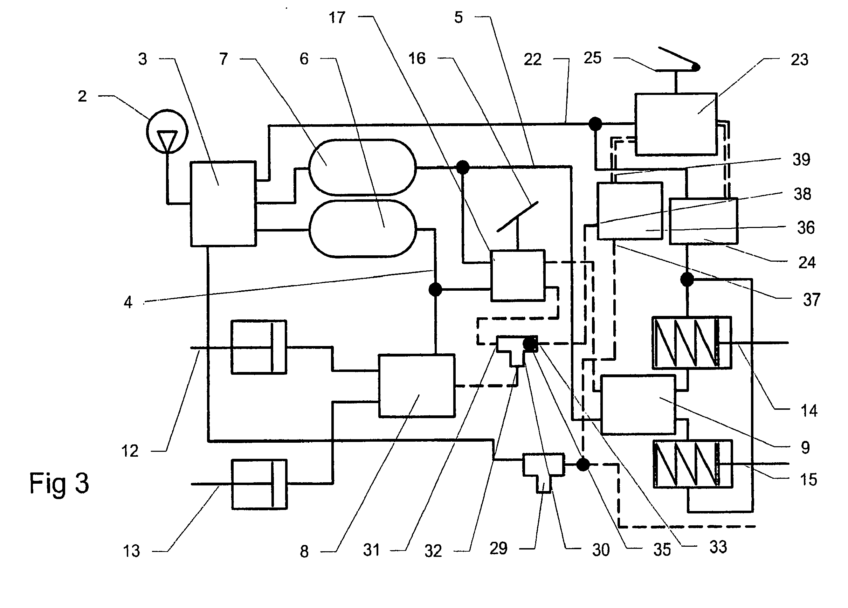

Figure 3 montre le dispositif de freinage lorsque le véhicule est en condition de stationnement normale et que le conducteur souhaite immobiliser le véhicule.

Le conducteur peut alors agir sur l'organe de commande 23 par l'intermédiaire du levier 25. La valve 24 interrompt le flux d'air comprimé vers les ressorts 26 et 27 qui peuvent alors pousser les actionneurs 14 et 15 en vue de bloquer le mouvement des roues correspondantes.

L'organe de commande 23 pilote simultanément le distributeur 36 qui devient passant.

Le distributeur 36 est certes passant mais aucun air comprimé ne se présente à son entrée 37.

En condition de stationnement normale, le dispositif de freinage par l'intermédiaire de son système de freinage de stationnement n'agit que sur le train roulant arrière.

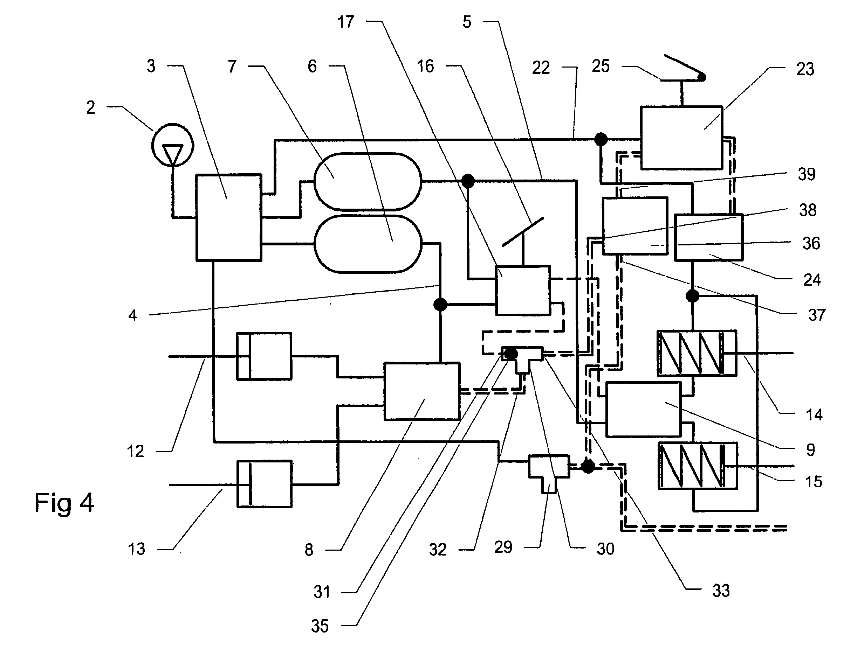

Figure 4 montre le dispositif de freinage lorsque le véhicule est en condition de stationnement exceptionnelle et le conducteur souhaite immobiliser le véhicule.

Une condition de stationnement exceptionnelle peut être, typiquement, le stationnement d'un véhicule sur une pente, éventuellement sur une pente de faible adhérence.

Généralement dans le cas d'un véhicule à transmission intégrale comme celui faisant l'objet du présent exemple, le conducteur au fur et à mesure que se dégradent les conditions d'adhérence, peut choisir :
- de bloquer le différentiel du train roulant arrière,
- d'enclencher l'entraînement moteur du train roulant avant,
- d'enclencher la gamme lente de la boîte de transfert,
- de bloquer le différentiel du train roulant avant.

Comme cela a été indiqué, le circuit de commande de la gamme de vitesses lente de la boîte de transfert est relié au distributeur 36.

Ainsi, l'entrée du distributeur 36 n'est alimentée, dans l'exemple décrit, que lorsque la gamme de vitesses lentes de la boîte de transfert est enclenchée, l'enclenchement étant réalisé par l'électrovanne 29.

L'enclenchement de la gamme de vitesses lentes de la boîte de transfert traduit des conditions d'évolution du véhicule sur un terrain difficile et notamment un terrain en pente.

Lorsque le conducteur souhaite immobiliser le véhicule, il agit sur l'organe de commande 23 par l'intermédiaire du levier. Le pilotage du système de frein de stationnement sur le train arrière se fait de la manière décrite précédemment. La valve 24 interrompt l'air comprimé qui maintenait la compression des ressorts 26 et 27 et ceux-ci poussent les actionneurs 14 et 15.

Simultanément, le distributeur 36 devient passant puisqu'aucune pression ne s'applique sur son orifice de pilotage 39.

L'air comprimé venant du circuit de commande de la gamme de vitesse lente de la boîte de transfert peut alors alimenter la double valve d'arrêt 32 par son entrée 33. Le module électronique de freinage EBS avant 8 reçoit ainsi un signal pour agir sur le train roulant avant.

Dans cette condition de stationnement exceptionnel, le véhicule est immobilisé grâce à son train roulant arrière et de plus grâce à son train roulant avant.

On voit ainsi que le dispositif de freinage selon l'invention permet d'améliorer sensiblement la capacité d'immobilisation d'un véhicule.

Ce résultat est obtenu, dans l'exemple qui vient d'être décrit, grâce à des moyens de pilotage fluidique du module électronique de freinage EBS du circuit de freinage avant 4 qui permettent d'agir sur le train avant en condition de stationnement du véhicule et ce en plus du système de frein de stationnement agissant sur le train roulant arrière.

Ces moyens de pilotage peuvent être une double valve d'arrêt 32 qui, en condition de stationnement, peut permettre de piloter le module électronique de freinage EBS avant 8.

Dans la mesure où il n'est pas nécessairement souhaitable en condition de stationnement de freinage du train roulant arrière et du train roulant avant, le dispositif selon l'invention présente des moyens d'activation sélective des moyens de pilotage du module électronique de freinage EBS du circuit avant. Ces moyens peuvent être un distributeur dont une entrée est alimentée par un circuit pneumatique qui est activée dans des conditions exceptionnelles d'évolution du véhicule.

Cela peut être la commande de la gamme de vitesses lente de la boîte de transfert, mais cela pourrait être la commande d'un blocage de différentiel.

Dans le cas d'un véhicule nacelle, cela pourrait être le déploiement des jambes de stabilisation.

On note également que le dispositif de freinage est entièrement à commande pneumatique, ce qui en terme de sécurité s'avère supérieur à des systèmes de commande électrique dont les performances peuvent se dégrader notamment à des températures importantes. Or, le dispositif de freinage selon l'invention vise à équiper plus spécialement un véhicule d'intervention, notamment de lutte contre l'incendie. Par ailleurs, le dispositif étant à commande entièrement pneumatique, il est susceptible de fonctionner, y compris lorsque le contact du véhicule est coupé.

Bien entendu, l'invention n'est pas limitée à la forme de réalisation décrite ci-dessus, mais elle en embrasse au contraire toutes les variantes de réalisation. L'invention pourrait notamment être mise en oeuvre dans le cadre d'un dispositif de freinage hydraulique.

## Revendications

1. Dispositif de freinage pour un véhicule présentant au moins deux trains roulants comprenant :
i. un premier circuit fluidique de freinage (5) agissant sur au moins un premier train roulant et, au moins un deuxième circuit fluidique de freinage (4), agissant sur au moins un deuxième train roulant, au moins le deuxième circuit de freinage possédant, notamment, un module électronique de freinage EBS (8), piloté fluidiquement et/ou électroniquement commandant la puissance de freinage à appliquer sur son train roulant, et
ii. un système fluidique de frein de stationnement (22) agissant, en condition de stationnement du véhicule, sur le premier train roulant,
**caractérisé en ce que** le dispositif de freinage comprend, en outre, des moyens de pilotage fluidique du module électronique de freinage EBS (8) du deuxième circuit de freinage (4) permettant d'agir sur au moins un deuxième train roulant en condition de stationnement du véhicule, lesdits moyens de pilotage fluidique du module électronique de freinage EBS du deuxième circuit de freinage étant connectés, d'une part, à un circuit de commande (18) du deuxième circuit fluidique de freinage pour agir sur le deuxième circuit de freinage (4), en condition de roulage du véhicule, et d'autre part à un circuit de commande du système de stationnement pour agir sur au moins un deuxième train roulant, en condition de stationnement du véhicule.

2. Dispositif selon la revendication 1, **caractérisé en ce qu'**il comprend des moyens d'activation sélective des moyens de pilotage fluidique du module électronique de freinage EBS du deuxième circuit de freinage (4) permettant en condition exceptionnelle de stationnement du véhicule d'agir sur le deuxième train roulant du véhicule.

3. Dispositif de freinage selon l'une des revendications 1 ou 2, **caractérisé en ce que** les moyens de pilotage fluidique du module électronique de freinage EBS (8) du deuxième circuit de freinage comprennent une double valve d'arrêt (30) permettant de piloter le module électronique de freinage EBS (8), présentant une entrée (31) reliée au circuit de commande du deuxième circuit de freinage (18) en condition de roulage du véhicule, et une entrée (33) reliée au circuit de commande du système fluidique de frein de stationnement.

4. Dispositif de freinage selon les revendications 2 et 3 prises en combinaison, **caractérisé en ce que** les moyens d'activation sélective des moyens de pilotage fluidique du module électronique de freinage EBS du deuxième circuit de freinage comprennent un distributeur (36) piloté par le système de stationnement interdisant un écoulement fluidique vers la double valve d'arrêt (30) en condition de stationnement normal et autorisant un écoulement fluidique vers la double valve d'arrêt (30) en condition exceptionnelle de stationnement.

5. Dispositif de freinage selon la revendication 4, **caractérisé en ce qu'**une électrovanne (29) d'un circuit fluidique de commande d'un organe du véhicule contrôle l'écoulement fluidique vers le distributeur (36).

6. Dispositif de freinage selon la revendication 5, **caractérisé en ce que** l'électrovanne (29) est l'électrovanne de commande d'un blocage de différentiel du premier train roulant.

7. Dispositif de freinage selon la revendication 5, **caractérisé en ce que** l'électrovanne (29) est l'électrovanne de commande de transmission du couple moteur au deuxième train routant.

8. Dispositif de freinage selon la revendication 5, **caractérisé en ce que** l'électrovanne (29) est l'électrovanne d'enclenchement d'une gamme de vitesse lente d'une boîte de vitesse de transfert.

9. Dispositif de freinage selon la revendication 5, **caractérisé en ce que** l'électrovanne (29) est l'électrovanne de commande d'un blocage de différentiel du deuxième train roulant.

10. Dispositif de freinage selon l'une des revendications 5 à 9, **caractérisé en ce que** le système fluidique de frein de stationnement comprend un organe de commande (23) qui pilote une valve (24) de commande des actionneurs de stationnement et le distributeur (36).

11. Dispositif de freinage selon l'une des revendications 1 à 10, **caractérisé en ce que** le premier train roulant est le train roulant arrière et le deuxième train roulant est le train roulant avant.

## Claims

1. Braking device for a vehicle having at least two wheelsets, comprising:
i. a first fluid brake circuit (5) acting on at least a first wheelset and at least a second fluid brake circuit (4) acting on at least a second wheelset, at least the second brake circuit having, in particular, an electronic braking system EBS (8) fluidically and/or electronically operated to control the braking effort to be applied to its wheelset, and
ii. a fluidic parking brake system (22) acting, when the vehicle is in the parked condition, on the first wheelset,
**characterized in that** the braking device further comprises fluidic means of operating the electronic braking system EBS (8) of the second brake circuit (4) to make it possible to act on at least a second wheelset when the vehicle is in the parked condition, the said means of fluidic operation of the electronic braking system EBS of the second brake circuit being connected, on the one hand, to a control circuit (18) controlling the second fluidic brake circuit in order to act on the second brake circuit (4), when the vehicle is in the driving condition, and, on the other hand, to a control circuit controlling the parking system in order to act on at least a second wheelset, when the vehicle is in the parked condition.

2. Device according to Claim 1, **characterized in that** it comprises means of selectively activating the means of fluidic operation of the electronic braking system EBS of the second brake circuit (4) making it possible, when the vehicle is in an exceptional parked condition, to act on the second wheelset of the vehicle.

3. Braking device according to one of Claims 1 and 2, **characterized in that** the means of fluidic operation of the electronic braking system EBS (8) of the second brake circuit comprise a double check valve (30) allowing the electronic braking system EBS (8) to be operated, having one inlet (31) connected to the control circuit that controls the second brake circuit (18) when the vehicle is in a driving condition, and one inlet (33) connected to the control circuit controlling the fluidic parking brake system.

4. Braking device according to Claims 2 and 3 considered in combination, **characterized in that** the means of selective activation of the means of fluidic operation of the electronic braking system EBS of the second brake circuit comprise a directional control valve (36) operated by the parking system and preventing fluid from flowing to the double check valve (30) under normal parking conditions and allowing fluid to flow to the double check valve (30) under exceptional parking conditions.

5. Braking device according to Claim 4, **characterized in that** an electrically operated valve (29) of a fluidic control circuit controlling a vehicle component controls the flow of fluid to the directional control valve (36).

6. Braking device according to Claim 5, **characterized in that** the electrically operated valve (29) is the control electrically operated valve for locking up the differential of the first wheelset.

7. Braking device according to Claim 5, **characterized in that** the electrically operated valve (29) is the electrically operated valve that controls the transmission of driving torque to the second wheelset.

8. Braking device according to Claim 5, **characterized in that** the electrically operated valve (29) is the electrically operated valve that engages a range of low gears in a transfer gear box.

9. Braking device according to Claim 5, **characterized in that** the electrically operated valve (29) is the electrically operated valve that controls the locking up of the differential of the second wheelset.

10. Braking device according to one of Claims 5 to 9, **characterized in that** the fluidic parking brake system comprises a control member (23) which operates a valve (24) that controls the parking actuators and the directional control valve (36).

11. Braking device according to one of Claims 1 to 10, **characterized in that** the first wheelset is the rear wheelset and the second wheelset is the front wheelset.

## Patentansprüche

1. Bremsvorrichtung für ein wenigstens zwei Radachsen aufweisendes Fahrzeug mit
i. einem ersten Bremsfluidkreis (5), der auf wenigstens eine erste Radachse wirkt, und wenigstens einem zweiten Bremsfluidkreis (4), der auf wenigstens eine zweite Radachse wirkt, wobei wenigstens der zweite Bremskreis insbesondere ein elektronisches Bremsmodul EBS (8) aufweist, das durch Fluid und/oder elektronisch gesteuert wird und die auf seine Radachse anzulegende Bremsleistung regelt, und
ii. einem Feststellbremsen-Fluidsystem (22), das bei Parkbedingungen des Fahrzeugs auf die erste Radachse wirkt,
**dadurch gekennzeichnet, dass** die Bremsvorrichtung weiterhin Fluidsteuereinrichtungen für das elektronische Bremsmodul EBS (8) des zweiten Bremskreises (4) umfasst, die ein Einwirken auf wenigstens eine zweite Radachse bei Parkbedingungen des Fahrzeugs erlauben, wobei die Fluidsteuereinrichtungen für das elektronische Bremsmodul EBS des zweiten Bremskreises einerseits mit einem Steuerkreis (18) des zweiten Bremsfluidkreises für ein Einwirken auf den zweiten Bremskreis (4) bei Fahrbedingungen des Fahrzeugs und andererseits mit einem Steuerkreis für das Feststellsystem für ein Einwirken auf wenigstens eine zweite Radachse bei Parkbedingungen des Fahrzeugs verbunden sind.

2. Vorrichtung nach Anspruch 1, **dadurch gekennzeichnet, dass** sie selektive Aktivierungseinrichtungen für die Fluidsteuereinrichtungen des elektronischen Bremsmoduls EBS des zweiten Bremskreises (4) aufweist, die es bei Ausnahmeparkbedingungen des Fahrzeugs erlauben, auf die zweite Radachse des Fahrzeugs einzuwirken.

3. Bremsvorrichtung nach einem der Ansprüche 1 oder 2, **dadurch gekennzeichnet, dass** die Fluidsteuereinrichtungen des elektronischen Bremsmoduls EBS (8) des zweiten Bremskreises ein doppeltes Sperrventil (30) aufweisen, das die Steuerung des elektronischen Bremsmoduls EBS (8) erlaubt und einen Einlass (31), der mit dem Steuerkreis des zweiten Bremskreises (18) bei Fahrbedingungen des Fahrzeugs verbunden ist, sowie einen Einlass (33) aufweist, der mit dem Steuerkreis des Fluidsystems für die Feststellbremse verbunden ist.

4. Bremsvorrichtung nach Anspruch 2 kombiniert mit Anspruch 3, **dadurch gekennzeichnet, dass** die selektiven Aktivierungseinrichtungen der Fluidsteuereinrichtungen für das elektronische Bremsmodul EBS des zweiten Bremskreises einen Verteiler (36) aufweisen, der durch das Feststellsystem gesteuert wird und einen Fluidstrom zu dem doppelten Sperrventil (30) bei normalen Parkbedingungen untersagt und einen Fluidstrom zu dem doppelten Sperrventil (30) bei Ausnahmeparkbedingungen erlaubt.

5. Bremsvorrichtung nach Anspruch 4, **dadurch gekennzeichnet, dass** ein Elektroventil (29) eines Fluidsteuerkreises für ein Fahrzeugelement den Fluidstrom zu dem Verteiler (36) steuert.

6. Bremsvorrichtung nach Anspruch 5, **dadurch gekennzeichnet, dass** das Elektroventil (29) das Elektroventil zur Steuerung einer Sperrung des Differentials der ersten Radachse ist.

7. Bremsvorrichtung nach Anspruch 5, **dadurch gekennzeichnet, dass** das Elektroventil (29) das Elektroventil zur Steuerung der Übertragung des Motordrehmoments auf die zweite Radachse ist.

8. Bremsvorrichtung nach Anspruch 5, **dadurch gekennzeichnet, dass** das Elektroventil (29) das Elektroventil für das Einrücken in einen niedrigen Geschwindigkeitsbereich eines Verteilergetriebes ist.

9. Bremsvorrichtung nach Anspruch 5, **dadurch gekennzeichnet, dass** das Elektroventil (29) das Elektroventil zur Steuerung einer Sperrung des Differentials der zweiten Radachse ist.

10. Bremsvorrichtung nach einem der Ansprüche 5 bis 9, **dadurch gekennzeichnet, dass** das Fluidsystem für die Feststellbremse ein Steuerelement (23) umfasst, das ein Ventil (24) zur Steuerung der Feststell-Aktivierungseinrichtungen und den Verteiler (36) steuert.

11. Bremsvorrichtung nach einem der Ansprüche 1 bis 10, **dadurch gekennzeichnet, dass** die erste Radachse die hintere Radachse und die zweite Radachse die vordere Radachse ist.
